(19) Europäisches Patentamt / European Patent Office / Office européen des brevets

(11) **EP 1 828 308 B1**

(12) **EUROPEAN PATENT SPECIFICATION**

(45) Date of publication and mention
of the grant of the patent:
**04.01.2012 Bulletin 2012/01**

(21) Application number: **05851955.4**

(22) Date of filing: **18.11.2005**

(51) Int Cl.:
*C08L 59/02* (2006.01)    *C09C 3/08* (2006.01)
*C09C 1/02* (2006.01)    *C09C 1/04* (2006.01)
*C09C 1/36* (2006.01)

(86) International application number:
**PCT/US2005/042199**

(87) International publication number:
**WO 2006/057975 (01.06.2006 Gazette 2006/22)**

(54) **HIGH DENSITY POLYOXYMETHYLENE COMPOSITIONS**

HOCHDICHTE POLYOXYMETHYLENZUSAMMENSETZUNGEN

COMPOSITIONS DE POLYOXYMETHYLENE HAUTE DENSITE

(84) Designated Contracting States:
**DE FR GB IT**

(30) Priority: **23.11.2004 US 630704 P**

(43) Date of publication of application:
**05.09.2007 Bulletin 2007/36**

(73) Proprietor: **E.I. DU PONT DE NEMOURS AND
COMPANY
Wilmington, DE 19898 (US)**

(72) Inventors:
• **YUAN, Shengmei
Newark, DE 19711 (US)**
• **FLEXMAN, Edmund A.
Wilmington, DE 19810 (US)**

(74) Representative: **Heinemann, Monica et al
Abitz & Partner
Patentanwälte
Postfach 86 01 09
81628 München (DE)**

(56) References cited:
**EP-A- 0 423 509        EP-A- 0 423 510
US-A1- 2004 116 575**

**Description**

**Background of the Invention**

Polymeric materials in general are useful for preparing a wide variety of articles, including those with intricate shapes, and permit considerable flexibility in the design of the articles. However, most polymers have lower density than other commonly-used materials such as metals or ceramics, and despite the greater design flexibility offered by polymeric materials, they are frequently unsuitable for applications where a high density material is required. Such applications are often in the area of aesthetics where a polymeric article with the heft and feel of metal or ceramic is desired. High density polymeric materials have been prepared by adding high density metal powders and/or metal salts to polymeric materials. European published patent application 0 423 510, for example, discloses the use of one or more of barium sulfate, zinc oxide, zirconium oxide, and zirconium silicate in a wide variety of thermoplastic resins, including acetals.

Polyoxymethylene (also known as polyacetal) has excellent physical properties such as toughness and stiffness, a low coefficient of friction, good solvent resistance, and the ability to crystallize rapidly, making polyoxymethylene resin compositions useful for preparing articles for use in many demanding applications. There is a need for a high density polyoxymethylene composition for many applications, but polyoxymethylene is sensitive to degradation and tends to discolor and degrade, often unpredictably, in the presence of many common high density additives. Thus it would be desirable to obtain a stable high density polyoxymethylene composition that does not suffer from undue degradation or discoloration.

**Summary of the Invention**

Briefly stated, and in accordance with one aspect of the present invention, there is provided a polyoxymethylene composition comprising:

(a) 20 to 70 weight percent polyoxymethylene;
(b) 20 to 70 weight percent of at least one surface coated mineral wherein the mineral is selected from the group consisting of zinc oxide, titanium dioxide, and barium sulfate, and
(c) 0.05 to 4 weight percent of at least one thermal stabilizer, and optionally
(d) 10 to 40 weight percent impact modifiers,

wherein the weight percentages are based on the total weight of the composition.

Pursuant to another aspect of the present invention, there is provided an article made from the polyoxymethylene composition above. The articles formed from this composition include casino or poker chips and perfume bottle caps.

**Detailed Description of the Invention**

The present invention is a high density polyoxymethylene composition comprising at least one polyoxymethylene, at least one surface-coated mineral selected from zinc oxide, barium sulfate, and titanium dioxide; and at least one thermal stabilizer.

The polyoxymethylene (i.e. POM or polyacetal) used in the present invention can be one or more homopolymers, copolymers, or a mixture thereof. Homopolymers are prepared by polymerizing formaldehyde and/or formaldehyde equivalents, such as cyclic oligomers of formaldehyde. Copolymers are derived from one or more comonomers generally used in preparing polyoxymethylene compositions in addition to formaldehyde and/ formaldehyde equivalents. Commonly used comonomers include acetals and cyclic ethers that lead to the incorporation into the polymer chain of ether units with 2-12 sequential carbon atoms. If a copolymer is selected, the quantity of comonomer will not be more than 20 weight percent, preferably not more than 15 weight percent, and most preferably about two weight percent. Preferable comonomers are 1,3-dioxolane, ethylene oxide, and butylene oxide, where 1,3-dioxolane is more preferred, and preferable polyoxymethylene copolymers are copolymers where the quantity of comonomer is about 2 weight percent. It is also preferred that the homo- and copolymers are: 1) homopolymers whose terminal hydroxy groups are end-capped by a chemical reaction to form ester or ether groups; or, 2) copolymers that are not completely end-capped, but that have some free hydroxy ends from the comonomer unit or are terminated with ether groups. Preferred end groups for homopolymers are acetate and methoxy and preferred end groups for copolymers are hydroxy and methoxy.

The polyoxymethylenes used in the compositions of the present invention can be branched or linear and will generally have a number average molecular weight of at least 10,000, and preferably about 20,000 to about 90,000. The molecular weight can be conveniently measured by gel permeation chromatography in m-cresol at 160 °C using a DuPont PSM bimodal column kit with nominal pore size of 60 and 1000 Å. The molecular weight can also be measured by determining the melt flow using ASTM D1238 or ISO 1133. The melt flow will preferably be in the range of 0.1 to 100 g/min, more preferably from 0.5 to 60 g/min, or yet more preferably from 0.8 to 40 glmin. for injection molding purpose. The polyoxymethylene will be present in the composition in 20 to 70 weight percent, or preferably in 35 to 70 weight percent, or more preferably 45 to 70 weight percent, based on the total weight of the composition.

The composition will contain a surface-coated mineral comprising a mineral selected from one or more of zinc oxide, barium sulfate, and titanium dioxide. Preferred coating agents include one or more of fatty acids, fatty acid salts, fatty acid esters, and fatty acid amides. Suitable coating agents may also include polymeric materials. By fatty acid is meant a straight chain or branched aliphatic acid having between 10 and 40 carbons atoms, inclusive. Fatty acid esters may be monoesters, diesters, triesters, or higher esters. The fatty acids, fatty acid salts, fatty acid esters, and fatty acid amides may be saturated or unsaturated. Unsaturated fatty acids, salts, esters, and amides that have been fully or partially epoxidized may be used. Examples of suitable surface coating agents include glycerol monostearate, glycerol monooleate, stearic acid, calcium stearate, linseed oil, soybean oil, and epoxidized soybean oil. The coated mineral preferably comprises about 95 to about 99.5 weight percent, or more preferably about 97 to about 99 weight percent mineral and preferably about 0.5 to 5 weight percent, or more preferably about 1 to about 3 weight percent coating agent. The coating agent may be applied to the mineral using any method known in the art such as tumbling the mineral and coating agent in a mixer.

The coated mineral will be present in 20 to 70 weight percent, or preferably in 40 to 70 weight percent, or more preferably 40 to 70 weight percent based on the total weight of the composition.

The composition of the present invention contains at least one thermal stabilizer that serves to stabilize the polymer from decomposition and reduce the amount of formaldehyde emitted from the composition and articles made therefrom. The stabilizer is preferably one or more of a polymer having formaldehyde reactive nitrogen groups as pendant groups on the polymer chain; a polyamide; a hydroxy containing polymer or oligomer, or a polymer having epoxy groups as pendant groups.

The polymeric stabilizer having formaldehyde reactive nitrogen groups as pendant groups on the polymer chain used in the present invention is described in U.S. patent 5,011,890, which is hereby incorporated by reference. The polymeric stabilizer having formaldehyde reactive nitrogen groups as pendant groups on the polymer chain can be a homopolymer or copolymer. By "formaldehyde reactive nitrogen groups" is meant pendant groups on the polymer chain that contain a nitrogen bonded to one or, preferably, two hydrogen atoms. The polymeric stabilizer having formaldehyde reactive nitrogen groups as pendant groups on the polymer chain preferably has at least ten repeat units. It preferably has a weight average molecular weight of greater than 5,000, more preferably greater than 10,000.

The formaldehyde reactive nitrogen groups can be incorporated into the polymeric stabilizer having formaldehyde reactive nitrogen groups as pendant groups on the polymer chain by using an appropriate nitrogen containing monomer, such as, for example, acrylamide and methacrylamide. Preferred nitrogen-containing monomers are those that result in polymeric stabilizer having formaldehyde reactive nitrogen groups as pendant groups on the polymer chain having two hydrogen atoms attached to the nitrogen. Alternatively, the formaldehyde reactive nitrogen groups can be generated on the polymeric stabilizer having formaldehyde reactive nitrogen groups as pendant groups on the polymer chain by modification of the polymer or copolymer.

The quantity of the formaldehyde reactive nitrogen groups in polymeric stabilizer having formaldehyde reactive nitrogen groups as pendant groups on the polymer chain is preferably such that the atoms in the backbone to which the formaldehyde reactive groups are attached, either directly or indirectly, are separated from each other (i.e., connected to each other) by not more than twenty chain atoms. Preferably, the polymeric stabilizer having formaldehyde reactive nitrogen groups as pendant groups on the polymer chain will contain at least one formaldehyde reactive nitrogen group per each twenty carbon atoms in the backbone of the polymer. More preferably, the ratio of formaldehyde reactive nitrogen groups to carbon atoms in the backbone will be 1:2-1:10 and yet more preferably 1:2-1:5.

The polymeric stabilizer having formaldehyde reactive nitrogen groups as pendant groups on the polymer chain can be a homopolymer or a copolymer. It is preferred that the polymeric stabilizer having formaldehyde reactive nitrogen groups as pendant groups on the polymer chain be polymerized from acrylamide or methacrylamide monomer by free radical polymerization and that the polymeric stabilizer prepared therefrom consist of at least 75 mole percent of units derived from acrylamide or methacylamide. More preferably, it consists of at least 90 mole percent of the above units, even more preferably, it consists of at least 95 mole percent of the above units, and yet more preferably, it consists of at least 99 mole percent of the above unit.

The polymeric stabilizer having formaldehyde reactive nitrogen groups as pendant groups on the polymer chain may be a copolymer in that it is polymerized from more than one monomer. The comonomer may or may not contain formaldehyde reactive nitrogen groups. Examples of other monomers that may be thus incorporated include styrene, ethylene, alkyl acrylates, alkyl methacrylates,N-vinylpyrrolidone, and acrylonitrile. -The comonomer preferably should be added such that it does not unduly minimize the number of moles of formaldehyde reactive groups per gram of polymeric stabilizer. Further, it should not unduly minimize the number of formaldehyde reactive sites per gram of polymeric stabilizer. Specific preferred stabilizers that are copolymeric include copolymers of hydroxypropyl methacrylate with acrylamide, methacrylamide, or dimethylaminoethyl methacrylate.

The polyamide stabilizer is an aliphatic polyamide and can include polyamide 6 and polyamide 6,6 and copolyamides such as polyamide 6/6,12 and polyamide 6/6,6 and terpolyamides such as polyamide 6,6/6,10/6. The polyamide stabilizer preferably has a melting point of less than about 210 °C. The polyamide stabilizer may be predispersed in a carrier resin such an ethylene/methacrylic acid copolymer, a partially neutralized ethylene/methacrylic acid copolymer (e.g. ionomer), or a thermoplastic polyurethane.

Hydroxy containing polymers and oligomers are described in U.S. patent 4,766,168, which is hereby incorporated by reference. The hydroxy groups of the hydroxy-containing polymers and oligomers used may be directly bonded to the polymer or oligomer backbone, or may be present on pendant groups, or both. Preferably the hydroxy containing polymers and oligomers will contain on average at least one hydroxy group per each 20 carbon atoms in the polymer or oligomer backbone and not more than one hydroxy group per carbon atom in the backbone.

Examples of suitable hydroxy containing polymers and oligomers include ethylene/vinyl alcohol copolymer; poly(vinyl alcohol); vinyl alcohol/methylmethacrylate copolymers; and hydroxyesters of poly(meth)acrylates.

Suitable examples of polymers having epoxy groups as pendant groups include polymers having glycidyl groups, such as polymers formed by polymerizing glycidyl methacrylate with ethylene and an acrylic ester or methacrylic ester. An examples of a suitable acrylic ester includes butyl acrylate. A preferred polymer having epoxy groups as pendant groups is an ethylene/n-butyl acrylate/glycidyl methacrylate terpolymer, commonly referred to as EBAGMA.

The thermal stabilizer is preferably present in about 0.05 to about 4 weight percent, or more preferably in about 0.1 to about 1 weight percent, based on the total weight of the composition.

The compositions of the present invention will preferably have a density of at least about 1.6 g/cc, more preferably of at least about 2 g/cc, or yet more preferably of at least 2.3 g/cc.

The compositions of the present invention may optionally further comprise additional components such as about 10 to about 40 weight percent impact modifiers; about 0.1 to about 1 weight percent lubricants; about 0.5 to about 5 weight percent plasticizer; about 0.01 to about 2 weight percent antioxidants; about 3 to about 40 weight percent fillers; about 1 to about 40 weight percent reinforcing agents; about 0.5 to about 10 weight percent nanoclays; about 0.01 to about 3 weight percent thermal stabilizers; about 0.05 to about 2 weight percent ultraviolet light stabilizers; about 0.05 to about 3 weight percent nucleating agents; and/or about 0.2 to about 5 weight percent flame retardants, where all weight percentages are based on the total weight of the composition.

Examples of suitable fillers include glass fibers and minerals such as precipitated calcium carbonate, talc, and wollastonite. Examples of suitable impact modifiers include thermoplastic polyurethanes, polyester polyether elastomers, and core-shell acrylate polymers. Examples of lubricants include silicone lubricants such as dimethylpolysiloxanes and their derivatives; oleic acid amides; alkyl acid amides; bis-fatty acid amides such as N,N'-ethylenebisstearamide; non-ionic surfactant lubricants; hydrocarbon waxes; chlorohydrocarbons; fluorocarbons; oxy-fatty acids; esters such as lower alcohol esters of fatty acids; polyvalent alcohols such as polyglycols and polyglycerols; and metal salts of fatty acids such as lauric acid and stearic acid. Examples of nucleating agents include titanium oxides and talc. Preferred antioxidants are hindered phenol antioxidants such as Irganox® 245 and 1090 available from Ciba. Examples of thermal stabilizers include calcium carbonate, magnesium carbonate, and calcium stearate. Examples of ultraviolet light stabilizers include benzotriazoles, benzophenones, aromatic benzoates, cyano acrylates, and oxalic acid anilides.

The high-density polyoxymethylene compositions of the present invention are made by melt-blending the components using any known methods. The component materials may be mixed thoroughly using a melt-mixer such as a single or twin-screw extruder, blender, kneader, Banbury mixer, etc. to give a resin composition. Or, part of the materials may be mixed in a melt-mixer, and the rest of the materials may then be added and further thoroughly melt-mixed.

The compositions of the present invention may be molded into articles using any suitable melt-processing technique. Commonly used melt-molding methods known in the art such as injection molding, extrusion molding, blow molding, and injection blow molding are preferred and injection molding is more preferred. The compositions of the present invention may be formed into films and sheets by extrusion to prepare both cast and blown films. These sheets may be further thermoformed into articles and structures that may be oriented from the melt or at a later stage in the processing of the composition.

Examples of articles that may be made from the compositions of the present invention include poker and casino chips, perfume bottle caps, and consumer products where the heft and feel of metal are needed.

## Examples

The following ingredients are used in the examples and comparative examples:

Polyoxymethylene refers to Delrin® 1260, a polyoxymethylene copolymer supplied by E.I. du Pont de Nemours, Inc., Wilmington, DE.

Zinc oxide A refers to AZO 66USP manufactured by US Zinc Corporation with a 4.0-6.0 m$^2$/g surface area and an apparent density of 0.32-0.64g/cm$^3$(20-40 lb/ft).

Zinc oxide B refers to XX503R manufactured b Zinc Corporation of America with a 1.2 m$^2$/g surface area and an apparent density of 1.04g/cm$^3$(65 lb/ft$^3$).

Uncoated barium sulfate refers to Huberbrite® 10, manufactured by J.M. Huber Corporation, Qunicy, IL.

Uncoated titanium dioxide refers to refers to Ti-Pure® R102, manufactured by DuPont Company, Wilmington, DE.

Stearic acid is manufactured by Mallinckrodt Baker, Inc.

Epoxidized soybean oil refers to Drapex 6.8, manufactured by Crompton Corporation, Middlebury, CT.

Glyceryl monostearate refers to Stepan GMS PURE manufactured by Stepan Company, Northfield, IL.

The minerals were coated with 2 weight percent, based on the weight of the mineral and coating agent, as indicated in Tables 1 and 2 by blending the mineral and coating agent in a Welex Laborotory Mixer manufactured by Welex Corporation, Philadelphia, PA at medium mixing speed. Coating was done at room temperature with epoxidized soybean oil. The mixer was heated to about 70 °C with hot water when stearic acid and glyceryl monostearate were used.

Determination of Thermal Stability:

The thermal stability of the compositions was determined by heating pellets of the compositions for about 30 minutes at a temperature of 259 °C. The formaldehyde evolved during the heating step is swept by a stream of nitrogen into a titration vessel containing a sodium sulfite solution where it reacts with the sodium sulfite to generate sodium hydroxide. The generated sodium hydroxide is continuously titrated with hydrochloric acid to maintain the original pH. The total volume of acid used is plotted as a function of time. The total volume of acid consumed at 30 minutes is proportional to the formaldehyde generated by the heated polyoxymethylene and is a quantitative measure of thermal stability. The percent thermal stability (referred to as TEF-T) is calculated by the following formula:

$$\text{TEF-T (\%)} = (V_{30} \times N \times 3.003)/S$$

where:

$V_{30}$ = the total volume in mL of acid consumed at 30 minutes,
N = the normality of the acid,
3.003 = (30.03 (the molecular weight of formaldehyde) x 100%)/(1000 mg/g), and
S = the sample weight in grams.

The results are shown in Table 1 under the heading of "TEF-T."

The melt flow index (MFR) was measured for each sample at 190 °C and at a load of 2.16 kg using ASTM-D 1238 method. The results are shown in Table 1.

Preparation of the Compositions:

The ingredients shown in Tables 1 and 2 were compounded using a 72.2-cm(30-inch) Wemer & Pfleiderer ZSK-30 twin-screw extruder. The blends were compounded at a barrel temperature of about 190-210 °C, a screw speed of about 150 RPM screw speed, and a rate of about 13.6 kg (30 pounds) per hour. Upon existing the extruder, the compositions were cooled and pelletized.

The pelletized compositions were dried in at 60 °C in a vacuum oven for a minimum of four hours and subsequently injection molded into test bars using a 42.5 g(1.5 oz.) Arburg Injection Molding Unit (Bosch, German). Physical properties were measured and the results are given in Tables 1 and 2. In the case of Comparative Examples 5-10, the composition had so badly degraded in the extruder that the extruded polymeric strands had little melt strength and could not be cut into pellets. Physical properties could not be measured for these compositions and it was not suitable for use in preparing articles.

Table 1

|  | Comp. Ex. 1 | Ex. 1 | Comp. Ex. 2 | Comp. Ex. 3 | Comp. Ex. 4 | Ex. 2 | Ex. 3 | Ex. 4 |
|---|---|---|---|---|---|---|---|---|
| Polyoxymethylene | 39.8 | 39.8 | 40 | 39.5 | 40 | 39.5 | 39.5 | 39.5 |
| Zinc oxide | 59.7 | -- | 60 | 60 | -- | -- | -- | -- |

(continued)

| | Comp. Ex. 1 | Ex. 1 | Comp. Ex. 2 | Comp. Ex. 3 | Comp. Ex. 4 | Ex. 2 | Ex. 3 | Ex. 4 |
|---|---|---|---|---|---|---|---|---|
| Zinc oxide A coated with 2 wt. % stearic acid | -- | 59.7 | -- | -- | -- | -- | -- | -- |
| Zinc oxide B coated with 2 wt. % stearic acid | -- | -- | -- | -- | 60 | 60 | -- | -- |
| Zinc oxide B coated with 2 wt. % epoxidized soybean oil | -- | -- | -- | -- | -- | -- | 60 | -- |
| Zinc oxide B coated with 2 wt. % glycerin monostearate | -- | -- | -- | -- | -- | -- | -- | 60 |
| Polymethacrylatnide | 0.5 | 0.5 | -- | 0.5 | -- | 0.5 | 0.5 | 0.5 |
| TEF-T | 0.17 | 0.07 | 1.06 | 0.09 | 0.10 | 0.12 | 0.01 | 0.09 |
| Tensile strength (MPa) | 34 | 31 | 37 | 37 | 33 | 35 | 30 | 33 |
| Tensile modulus (MPa) | 5849 | 6027 | 5685 | 5557 | 6203 | 5384 | 4412 | 5218 |
| Notched Izod impact strength (N(16-ft/in)) | 37.3 (0.7) | 58.7 (1.1) | 39.5 (0.74) | 31.5 (0.59) | 35.8 0.67) | 34.7 (0.65) | 49,0 (0.90) | 42.2 (0.79) |
| Density (g/cm$^3$) | 2.4 | 2.4 | 2.5 | 2.4 | 2.4 | 2.4 | 2.4 | 2.4 |
| Melt flow rate (g/10 min) | 26.3 | 16.2 | 34.3 | 25.6 | 36.3 | 31.7 | 34.2 | 32.5 |
| Ingredient quantities are given in weight percent based on the total weight of the composition. | | | | | | | | |

Table 2

| | Comp. Ex.5 | Comp. Ex. 6 | Comp. Ex.7 | Ex. 5 | Ex. 6 | Ex.7 | Comp. Ex. 8 | Comp. Ex. 9 | Comp. Ex.10 | Ex. 8 | Ex. 9 | Ex. 10 |
|---|---|---|---|---|---|---|---|---|---|---|---|---|
| Polyoxymethylene | 40 | 39.8 | 40 | 39.8 | 39.8 | 39.8 | 40 | 39.8 | 40 | 39.8 | 39.8 | 39.8 |
| Uncoated barium sulfate | 60 | 59.7 | -- | -- | -- | -- | -- | -- | -- | -- | -- | -- |
| Barium sulfate coated with 2 wt. % stearic acid | | -- | 60 | 59.7 | -- | -- | -- | -- | -- | -- | -- | -- |
| Barium sulfate coated with 2 wt. % epoxidized soybean oil | -- | -- | -- | -- | 59.7 | -- | -- | -- | -- | -- | -- | -- |
| Barium sulfate coated with 2 wt % glycezin monostearate | -- | -- | -- | -- | | 59.7 | -- | -- | -- | -- | -- | -- |
| Uncoated titanium dioxide | -- | -- | -- | -- | -- | -- | 60 | 59.7 | -- | -- | -- | -- |
| Titanium dioxide coated with 2 wt. % stearic acid | -- | -- | -- | -- | -- | -- | -- | -- | 60 | 59.7 | -- | -- |
| Titanium dioxide coated with 2 wt. % epoxidized soybean oil | -- | -- | -- | -- | -- | -- | -- | -- | -- | -- | 59.7 | -- |
| Titanium dioxide coated with 2 wt. % glycerin monostearate | -- | -- | -- | -- | -- | -- | -- | -- | -- | -- | -- | 59.7 |
| Polymethacrylamide | -- | 0.5 | -- | 0.5 | 0.5 | 0.5 | -- | 0.5 | -- | 0.5 | 0.5 | 0,5 |
| TEF-T | 7.46 | 6.54 | >8 | 0.67 | 1.31 | 2.9 | 7.47 | 7.51 | 3.71 | 1.96 | 1.06 | 1.8 |
| Tensile strength (MPa) | -- | -- | -- | 28 | 32 | 28 | -- | -- | -- | 33 | 34 | 30 |

EP 1 828 308 B1

(continued)

| | Comp. Ex.5 | Comp. Ex. 6 | Comp. Ex.7 | Ex. 5 | Ex. 6 | Ex.7 | Comp. Ex. 8 | Comp. Ex. 9 | Comp. Ex.10 | Ex. 8 | Ex. 9 | Ex. 10 |
|---|---|---|---|---|---|---|---|---|---|---|---|---|
| Tensile modulus (MPa) | -- | -- | -- | 5870 | 5032 | 5898 | -- | -- | -- | 4875 | 5919 | 4838 |
| Notched Izod impact strengtle (N (lb-ft/in)) | -- | -- | -- | 42.7 (0.8) | 35.8 (0.67) | 27.8 (0.52) | -- | -- | -- | 26.7 (0.5) | 21.4 (0.4) | 26.7 (0.5) |
| Density (g/cm$^3$) | -- | -- | -- | 23 | 2.16 | 2.29 | -- | -- | -- | 2 | 2.26 | 2.22 |
| Melt flow rate (g/10 min) | -- | -- | -- | 25.8 | 25.6 | 25.4 | -- | -- | -- | 5.34 | 8.16 | 5.83 |
| Ingredient quantities are given in weight percent based on the total weight of the composition. | | | | | | | | | | | | |

**Claims**

1. A polyoxymethylene composition comprising:

   (a) 20 to 70 weight percent polyoxymethylene,
   (b) 20 to 70 weight percent at least one surface-coated mineral,
   wherein the mineral is selected from the group consisting of zinc oxide, titanium dioxide, and barium sulfate,
   (c) 0.05 to 4 weight percent of at least one thermal stabilizer, and optionally
   (d) 10 to 40 weight percent impact modifiers.

2. The composition of claim 1, wherein the thermal stabilizer is selected from at least one of a polymer having formaldehyde reactive nitrogen groups as pendant groups on the polymer chain; a polyamide; a hydroxy containing polymer or oligomer; or a polymer having epoxy groups as pendant groups.

3. The composition of claim 1 or 2, wherein the mineral is coated with one or more coating agents selected from fatty acids, fatty acid salts, fatty acid esters, and fatty acid amides, preferably with one or more of stearic acid, stearic acid esters, stearic acid salts, linseed oil, soybean oil, and epoxidized soybean oil, most preferably with glycerol monostearate and/or calcium stearate.

4. The composition of claim 1, 2 or 3, wherein the thermal stabilizer is a polymer having formaldehyde reactive nitrogen groups as pendant groups on the polymer chain, prefarably a polyacrylamide or polymethacrylamide.

5. The composition of claim 1, 2 or 3, wherein the thermal stabilizer is a hydroxy containing polymer or oligomer, preferably an ethylene/vinyl alcohol copolymer.

6. The composition of claim 1, 2 or 3, wherein the thermal stabilizer is a polymer having epoxy groups as pendant groups, preferably an ethylene/butyl acrylate/glycidyl methacrylate terpolymer.

7. The composition of any one of claims 1 to 6, wherein the mineral is zinc oxide.

8. The composition of any one of claims 1 to 6, wherein the mineral is barium sulfate.

9. The composition of any one of claims 1 to 6, wherein the mineral is titanium dioxide.

10. The composition of any one of claims 1 to 9, wherein the composition has a density of at least 2.3 $g/cm^3$, preferably of at least 2 $g/cm^3$, most preferably of at least 1.6 $g/cm^3$.

11. An article prepared from the composition of any one of claims 1 to 10.

12. The article of claim 11, in the form of a casino or poker chip.

13. The article of claim 12, in the form of a perfume bottle cap.

**Patentansprüche**

1. Polyoxymethylen-Zusammensetzung, umfassend:

   (a) 20 bis 70 Gewichtsprozent Polyoxymethylen,
   (b) 20 bis 70 Gewichtsprozent mindestens eines oberflächenbeschichteten Minerals, wobei das Mineral aus der Gruppe ausgewählt ist, bestehend aus Zinkoxid, Titandioxid und Bariumsulfat,
   (c) 0,05 bis 4 Gewichtsprozent mindestens eines Wärmestabilisators, und wahlweise
   (d) 10 bis 40 Gewichtsprozent Schlagzähmodifizierer.

2. Zusammensetzung nach Anspruch 1, wobei der Wärmestabilisator aus mindestens einem der Folgenden ausgewählt ist: ein Polymer, das mit Formaldehyd reaktive Stickstoffgruppen als Seitengruppen auf der Polymerkette hat, ein Polyamid, ein Polymer oder Oligomer, das Hydroxid enthält, oder ein Polymer, das Epoxygruppen als Seitengruppen hat.

**3.** Zusammensetzung nach Anspruch 1 oder 2, wobei das Mineral mit einem oder mehreren Beschichtungsmitteln bescllichtet ist, ausgewällt aus: Fettsäuren, Fettsäuresalzen, Fettsäureestern und Fettsäureamiden, vorzugsweise mit einem oder mehreren Beschichtungsmitteln ausgewählt aus Stearinsäure, Stearinsäureesler, Stearinsäuresalze, Leinöl, Sojabohnenöl und epoxidiertem Sojaöl, am meisten bevorzugt mit Glycerinmonostearat und/oder Calciumstearat.

**4.** Zusammensetzung nach Anspruch 1, 2, oder 3, wobei der Wärmestabilisator ein Polymer ist, das mit Formaldehyd reaktive Stickstoffgruppen als Seitengruppen auf der Polymerkette hat, vorzugsweise ein Polyacrylamid oder ein Polymethacrylamid,

**5.** Zusammensetzung nach Anspruch 1, 2 oder 3, wobei der Wärmestabilisator ein Polymer oder Oligomer ist, das Hydroxid enthält, vorzugsweise ein Ethylen/Vinylalkohol-Copolymer.

**6.** Zusammensetzung nach Anspruch 1, 2, oder 3, wobei der Wärmestabilisator ein Polymer mit Epoxygruppen als Seitengruppen ist, vorzugsweise ein Ethylen/Butylacrylat/ Glycidylmethacrylat-Terpolymer.

**7.** Zusammensetzung nach einem der Ansprüche 1 bis 6, wobei das Mineral Zinkoxid ist.

**8.** Zusammensetzung nach einem der Ansprüche 1 bis 6, wobei das Mineral Bariumsulfat ist.

**9.** Zusammensetzung nach einem der Ansprüche 1 bis 6, wobei das Mineral Titandioxid ist.

**10.** Zusammensetzung nach einem der Ansprüche 1 bis 9, wobei die Zusammensetzung eine Dichte von mindestens 2,3 g/cm$^3$, vorzugsweise von mindestens 2 g/cm$^3$, am meisten bevorzugt von mindestens 1,6 g/cm$^3$ aufweist.

**11.** Artikel der aus der Zusammensetzung nach einem der Ansprüche 1 bis 10 hergestellt wird.

**12.** Artikel nach Anspruch 11, der die Form eines Casino- oder Pokerchips hat.

**13.** Artikel nach Anspruch 12, der die Form eines Verschlusses einer Parfümflasche hat.

**Revendications**

**1.** Composition de polyoxyméthylène, comprenant:

(a) 20 à 70 pour cent en poids de polyoxyméthylène,
(b) 20 à 70 pour cent en poids d'au moins un minéral revêtu en surface, le minéral étant sélectionné dans le groupe constitué de l'oxyde de zinc, du dioxyde de titane, et du sulfate de barium,
(c) 0,05 à 4 pour cent en poids d'au moins un stabilisateur thermique, et optionnellement
(d) 10 à 40 pour cent en poids de modificateurs d'impact.

**2.** Composition selon la revendication 1, dans laquelle le stabilisateur thermique est un polymère ayant des groupes d'azote réagissant avec le formaldéhyde en tant que groupes pendants sur la chaîne polymère et/ou un polyamide et/ou un polymère ou oligomère contenant de l'hydroxy et/ou un polymère ayant des groupes epoxy en tant que groupes pendants.

**3.** Composition selon la revendication 1 ou 2, dans laquelle le minéral est revêtu d'un ou de plusieurs agents de revêtement sélectionnés parmi les acides gras, les sels d'acides gras, les esters d'acides gras, et les amides d'acides gras, de préférence d'un ou plusieurs agents sélectionnés parmi l'acide stéarique, des esters d'acide stéarique, des sels d'acide stéarique, de l'huile de lin, de l'huile de soja, et de l'huile de soja époxydée, de manière la plus préférée de monostéarate de glycérol et/ou de stéarate de calcium.

**4.** Composition selon la revendication 1, 2 ou 3, dans laquelle le stabilisateur thermique est un polymère ayant des groupes d'azote réagissant avec le formaldéhyde en tant que groupes pendants sur la chaîne polymère, de préférence un polyacrylamide ou un polyméthacrylamide.

**5.** Composition selon la revendication 1, 2 ou 3, dans laquelle le stabilisateur thermique est un polymère ou oligomère contenant de l'hydroxy, de préférence un copolymère d'éthylène/alcool vinylique.

6. Composition selon la revendication 1, 2 ou 3, dans laquelle le stabilisateur thermique est un polymère ayant des groupes epoxy en tant que groupes pendants, de préférence un terpolymère d'éthylène/butylacrylate/glycidyl/méthacrylate.

7. Composition selon l'une quelconque des revendications 1 à 6, dans laquelle le minéral est l'oxyde de zinc.

8. Composition selon l'une quelconque des revendications 1 à 6, dans laquelle le minéral est le sulfate de baryum

9. Composition selon l'une quelconque des revendications 1 à 6, dans laquelle le minéral est le dioxyde de titane.

10. Composition selon l'une quelconque des revendications 1 à 9, la composition ayant une densité d'au moins 2,3 g/cm$^3$, de préférence au moins 2g/cm$^3$, mieux encore d'au moins 1,6 g/cm$^3$.

11. Article fabriqué à partir de la composition selon l'une quelconque des revendications 1 à 10.

12. Article selon la revendication 11, sous la forme d'un jeton de casino ou de poker.

13. Article selon la revendication 12, sous la forme d'un bouchon de bouteille de parfum.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0423510 A
- US 5011890 A
- US 4766168 A